Europäisches Patentamt

European Patent Office

Office européen des brevets

(19)

(11) **EP 0 483 397 B1**

(12) **EUROPÄISCHE PATENTSCHRIFT**

(45) Veröffentlichungstag und Bekanntmachung des Hinweises auf die Patenterteilung:
**14.02.1996  Patentblatt 1996/07**

(51) Int Cl.$^6$: **H04L 12/56**

(21) Anmeldenummer: **90120746.4**

(22) Anmeldetag: **29.10.1990**

(54) **Verfahren zur Überwachung von einer Bitrate von wenigstens einer virtuellen Verbindung**

Method for controlling the bit rate of at least one virtual circuit

Méthode pour contrôler le débit binaire d'au moins un circuit virtuel

(84) Benannte Vertragsstaaten:
**AT BE CH DE DK ES FR GB GR IT LI NL SE**

(43) Veröffentlichungstag der Anmeldung:
**06.05.1992  Patentblatt 1992/19**

(73) Patentinhaber:
**SIEMENS AKTIENGESELLSCHAFT**
**D-80333 München (DE)**

(72) Erfinder:
- **Horn, Michael, Dipl.-Math.**
  **D-8000 München 90 (DE)**
- **Hinterberger, Christian, Dipl.-Ing.**
  **W-8150 Holzkirchen (DE)**
- **Huth, Hans-Peter, Dipl.-Ing.**
  **W-8000 München 19 (DE)**

(56) Entgegenhaltungen:
**EP-A- 0 310 173        EP-A- 0 366 635**
**EP-A- 0 381 275**

**Beschreibung**

Die Erfindung betrifft ein Verfahren zur Überwachung von wenigstens einer Bitrate von wenigstens einer virtuellen Verbindung, deren auf einer Übertragungsstrecke ankommende Verbindungszellen bezüglich ihrer zeitlichen Häufigkeit überprüft werden.

Beispielsweise in einem Breitband-Übertragungsnetz, für welches beispielsweise der sog. Asynchronous Transfer Mcde (ATM) vorgesehen ist, können die zu übertragenden Informationen in Verbindungszellen von einer festen Länge übertragen werden. Als ein Leistungsmerkmal eines solchen ATM-Netzes sollen virtuelle Verbindungen mit verbindungsindividuellen Bitraten einrichtbar sein. Ein Teilnehmer in diesem Netz erhält damit die Möglichkeit, für seine Anwendung eine geeignete Bitrate auszuwählen, beispielsweise durch eine bestimmte Dienstklasse. Für Dienstklassen im ATM-Netz können verschiedene Charakteristika vorgesehen sein, beispielsweise eine mittlere Bitrate, eine Spitzenbitrate, eine Burstlänge. Die mittlere Bitrate ist die über eine Dauer der Verbindung gemittelte Datenrate. Die Spitzenbitrate ist die über ein kurzes Zeitintervall gemittelte Datenrate. Ein Burst der Datenrate einer Verbindung liegt dann vor, wenn kurzfristig die mittlere Bitrate um ein Mehrfaches überschritten wird. Häufig auftretende und vor allem lange Bursts können in den Vermittlungsknoten zu Problemen führen, beispielsweise zu Pufferüberläufen. Deshalb soll eine Begrenzung von Burstlängen vorgesehen sein. Bursts treten vorwiegend bei Verbindungen der Datenverarbeitunc und deren Anwendungen auf. Dabei wird oft das 10-fache einer mittleren Bitrate überschritten.

Demgegenüber erzeugt der normale Telefonverkehr einen kontinuierlichen, also burstfreien Datenstrom, welcher vorwiegend während des Sprechens seine maximale Bitrate von beispielsweise 64 kBit/sec kontinuierlich aufweist. Die Charakteristika von Dienstklassen, beispielsweise auch eine Berechnung einer Verbindungsgebühr, sollen die möglichen Anwendungen berücksichtigen.

In einem Übertragungsnetz werden Datenströme aus Verbindungszellen vieler Teilnehmer auf gemeinsame Übertragungsleitungen konzentriert. Ein Fehlverhalten eines Teilnehmers durch Bursts bei einer dieser Verbindungen kann damit auch andere Verbindungen beeinträchtigen. Um dies zu vermeiden, soll die vom Teilnehmer angemeldete Bitrate bereits beim Zugang zum Netz verbindungsindividuell überwacht werden, also beispielsweise noch vor dem für diese Verbindung ersten Koppelfeld. Dies soll durch eine Überwachung gemäß einer sog. Policing-Funktion erfolgen.

Auf einer Anschlußleitung sollen viele virtuelle Verbindungen mit unterschiedlichen Bitraten gleichzeitig aktiv sein können. Jeder der virtuellen Verbindungen auf der Anschlußleitung wird eine Nummer zur Identifizierung zugeordnet, ein sog. Virtual Channel Identifier (VCI). Bei einem Anschluß einer Nebenstellenanlage oder eines lokalen Netzes, eines sog. Lokal Area Networkes (LAN), sind vielfach mehrere hundert VCIs einzeln zu überwachen. Eine Policing-Funktion mit solchen Leistungsanforderungen konnte bisher nicht realisiert werden.

Eine bekannte Methode zur Überwachung einzelner virtueller Verbindungen arbeitet nach einem sog. "Leaky-Bukket-Prinzip. Dieses Prinzip ist beispielsweise beschrieben im Tagungsbericht zur issls 88, Boston 1988, Kapitel 12.2, (IEEE) von den Autoren W.Kowalk und R.Lehnert unter dem Titel "The Policing Function to Control User Access in ATM-Networks, Definition and Implementation". Es wird die Überwachung einer eingestellten Bitrate und einer eingestellten Burstlänge ermöglicht. Es ist für jede der zu überwachenden Verbindungen verbindungsindividuell je ein Zähler, je ein Schwellenwert, je ein Dekrementierwert, sowie je ein Dekrementiertakt vorgesehen. Es wird in periodischen Zeitabständen, entsprechend der Länge des verbindungsindividuellen Dekrementiertaktes, ein Zählerstand des verbindungsindividuellen Zählers um den verbindungsindividuellen Dekrementierwert vermindert. Dieser Zählerstand wird beim Erreichen negativer Werte auf Null gesetzt. Dieser verbindungsindividuelle Zählerstand wird jedesmal hochgezählt, wenn für die diesem zugehörige überwachte Verbindung eine Verbindungszelle ankommt. Sobald dieser Zählerstand den verbindungsindividuellen Schwellenwert überschreitet, wird eine Sonderbehandlung für diese Verbindung durchgeführt. Bei dieser Sonderbehandlung kann die virtuelle Verbindung abgebrochen werden. Ebenso kann stattdessen ein Unterdrücken einer oder mehrerer Verbindungszellen erfolgen, so daß die Verbindung, wie bei einer kurzen Unterbrechung, nach dieser Reduzierung ihrer Bitrate nachfolgend wieder weiter bestehen kann. Weiters kann bei dieser Sonderbehandlung auch diese Verbindung unterbrechungsfrei weiterbestehen. Durch Auswahl der verbindungsindividuellen Parameter wird die Überwachung der Verbindung modifiziert. Also insbesondere durch den jeweiligen Dekrementierwert und den Dekrementiertakt wird die ausgewählte mittlere Bitrate kontrolliert. Durch den Schwellenwert wird die maximale Burstlänge beschränkt. Diese Parameter können für jede der Verbindungen unterschiedlich sein. Für jede VCI wird je ein verbindungsindividueller Zähler benötigt, und die verbindungsindividuellen Parameter sollen verbindungsindividuell gespeichert sein. Bei einem gleichen Takt für alle Verbindungen kann der Dekrementiertakt auch global gespeichert werden. Da alle verbindungsindividuellen Zähler innerhalb des jeweiligen Dekrementiertaktes bearbeitet werden müssen, ist nur eine geringe Anzahl von überwachbaren Verbindungen möglich. Als eine unzureichende Methode können mehrere Verbindungen gemeinsam überwacht werden, indem ihre Bitraten in Summe kontrolliert werden. Bei einem Überschreiten der aufsummierten Schwellenwerte kann dabei jedoch nicht unterschieden werden, welcher von den Teilnehmern seinen Schwellenwert überschritten hat.

Aus der europäischen Offenlegungsschrift EP-A-0 381 275 ist ein Datenübertragungsverfahren für Datenzellen über eine Mehrzahl von asynchronen zeitmultiplexen Übertragungskanälen bekannt, wobei der Zustand eines Zählers für jeden Übertragungskanal in Übereinstimmung mit der Nummer der Datenzellen pro Zeiteinheit gehalten wird. Insbesondere ist dieser Offenlegungsschrift zu entnehmen, daß die Überwachung einer Mehrzahl von Kanälen mittels einer einzigen Überwachungsvorrichtung möglich ist. Dabei werden die Übertragungskanäle vor dem Überschreiten einer maximalen mittleren Zellenhäufigkeit geschützt.

Die Aufgabe der Erfindung besteht darin, ein weiteres Verfahren anzugeben zur Überwachung von wenigstens einer Bitrate von wenigstens einer virtuellen Verbindung, deren auf einer Übertragungsstrecke ankommende Verbindungszellen bezüglich ihrer zeitlichen Häufigkeit überprüft werden, sodaß auch für eine größere Anzahl von zu überwachenden Verbindungen sowie von Verbindungen unterschiedlicher Bitraten dieses Verfahren einsetzbar ist.

Diese Aufgabe wird durch die im Patentanspruch 1 angegebenen Merkmale gelöst.

Aus den Unteransprüchen ergeben sich Weiterbildungen und bevorzugte Ausführungsformen der Erfindung.

Der Erfindung liegt die Erkenntnis zugrunde, daß ein verbindungsindividueller Überwachungszählerstand nur zu Zeitpunkten von Bedeutung ist, bei denen eine ankommende Verbindungszelle einer zu überwachenden virtuellen Verbindung vorliegt, so daß dieser Überwachungszähler nicht ständig aktualisiert werden muß, sondern daß nur ein zentraler Zähler erforderlich ist, dessen Zählerstand verbindungsindividuell gelesen und notiert wird zu diesen Zeitpunkten, so daß eine Zählerstanddifferenz des zentralen Zählers zwischen ankommenden Verbindungszellen kontrollierbar ist anhand eines erwarteten mittleren Abstandes zwischen den ankommenden Verbindungszellen, so daß beispielsweise durch eine Aufsummierung dieser Abweichungen der Überwachungszählerstand nachgebildet werden kann. Das erfindungsgemäße Verfahren ist einsetzbar zur Überwachung von Bitraten von virtuellen Verbindungen. Es können unterschiedliche verbindungsindividuelle Bitraten einer sehr großen Anzahl virtueller Verbindungen in einfacher Weise überwacht werden. Entsprechend der Verwendung eines zentralen Zählers, eines sog. Mastercounters, kann dieses Verfahren auch als Mastercounter Verfahren bezeichnet werden. Zur Überwachung von Bitraten von virtuellen Verbindungen beispielsweise eines ATM-Netzes wird ein Verfahren für eine Policing-Funktion angegeben. In einem zentralen Zähltakt wird nur ein zentraler Zähler gezählt. In den verbindungsindividuellen Datenfeldern werden nur bei einer ankommenden Verbindungszelle Zählerstände notiert, errechnet, verglichen und geprüft. Dadurch wird eine große Anzahl überwachbarer Anschlußleitungen ermöglicht, auch bei höheren Bitraten.

Im Gegensatz zum zuvor erläuterten bekannten Verfahren nach dem Leaky-Bucket-Prinzip bietet das Mastercounter-Verfahren den Vorteil, daß nicht mehr viele einzelne verbindungsindividuelle Zähler pro Zellentakt gezählt werden müssen, sondern daß lediglich der zentrale Zähler, der Mastercounter, gezählt wird und daß nur bei einer ankommenden Verbindungszelle ein Überwachungszählerstand eines virtuellen verbindungsindividuellen Zählers errechnet und ausgewertet werden muß. Beim verbindungsindividuellen Überwachungszähler im Mastercounterverfahren handelt es sich also nicht um einen hardwaremäßig zu realisierenden Zähler, sondern nur um jeweils gespeicherte Überwachungszählerstände, mittels deren der Zählerstand des verbindungsindividuellen Überwachungszählers nur zu den genannten Zeitpunkten nachgebildet wird.

Dieser enorme Vorteil wird unter Ausnutzung der Tatsache erreicht, daß bei einer ankommenden Verbindungszelle nur der Zählerstand des verbindungsindividuellen Zählers relevant ist, welcher beispielsweise einer VCI der gerade empfangenen Verbindungszelle zugeordnet ist. Dieser Überwachungszählerstand kann errechnet werden. Als Parameter sind ein Schwellenwert und ein Dekrementierwert erforderlich. Weiters ist ein alter Zählerstand des zentralen Zählers verbindungsindividuell zu notieren beim Eintreffen der letzten zuvor angekommenen Verbindungszelle, welche zu der betreffenden VCI und damit zur selben virtuellen Verbindung gehört. Zu jenem Zeitpunkt ist ebenso ein alter verbindungsindividueller Überwachungszählerstand zu notieren. Mit diesen beiden Werten sowie mit einem neuen Zählerstand des zentralen Zählers , welcher zum Zeitpunkt einer ankommenden Verbindungszelle abzulesen ist, kann ein neuer verbindungsindividueller Überwachungszählerstand errechnet werden.

Zum zentralen Zellentakt beispielsweise wird der zentrale Zähler gezählt. Falls eine Verbindungszelle ankommt, wird der betreffende verbindungsindividuelle Überwachungszählerstand neu berechnet. Als Policing-Funktion kann bei dieser Auswertung das Leaky-Bucket-Prinzip dienen. Die Anzahl von überwachbaren virtuellen Verbindungen ist dabei nur durch den verfügbaren Speicherplatz zum Notieren beschränkt.

Das Mastercounter-Verfahren kann so modifiziert werden, daß der zentrale Zähler pro Zellentakt um eine bestimmte Zahl gezählt wird. Diese Zahl kann gleich Eins sein oder bei einer anderen Ausführungsform größer als Eins sein. Die verbindungsindividuellen Parameter können entsprechend angepaßt werden. Dadurch kann insbesondere im hochbitratigen Bereich, beispielsweise für 20 bis 140 MBit/sec, eine höhere Auflösung erreicht werden, so daß eine größere Anzahl von Bitraten und Verkehrsklassen in diesem Bereich erzielbar ist. Ebenso kann für eine Verkehrsklasse oder eine Gruppe von Verkehrsklassen die Überwachung der Verbindungen mit einem zugeordneten zentralen Zähler durchgeführt werden, und für eine weitere Verkehrsklasse oder eine weitere Gruppe von Verkehrsklassen die Überwachung der Verbindungen mit einem weiteren zugeordneten zentralen Zähler durchgeführt werden. Dadurch ist eine bessere Anpassung des zentralen Zähltaktes und der verbindungsindividuellen Parameter erzielbar.

Es sind Ausführungsformen der Erfindung möglich, bei welchen der zentrale Zähler hochgezählt wird, und ebenso sind Ausführungsformen möglich, bei denen der zentrale Zähler heruntergezählt wird. Für die Vorgehensweise beim Überlauf des zentralen Zählers, welcher gleichbedeutend ist dem Unterlauf des zentralen Zählers, sind Varianten möglich. Die Begriffe Überlauf oder Überschreiten bzw. Unterlauf oder Unterschreiten beziehen sich allgemein auf die Zählrichtung der jeweiligen Zähler.

In einer bevorzugten Ausführungsform kann der Überlauf des zentralen Zählers für jede der zu überwachenden Verbindungen mittels je einer ersten verbindungsindividuellen Überlaufanzeige notiert werden und damit für einen späteren Zeitpunkt auslesbar festgehalten werden. In weiteren bevorzugten Ausführungsformen kann vor dem Notieren des Überlaufs des zentralen Zählers ein Inhalt der ersten Überlaufanzeige in einer zweiten verbindungsindividuellen Überlaufanzeige notiert werden, sodaß auch ein mehrmaliges Überlaufen des zentralen Zählers damit für einen späteren Zeitpunkt auslesbar festgehalten werden kann.

Der Mastercounter kann nach einer endlichen Zeitspanne überlaufen, welche von einer Zählerbreite und dem Zähltakt abhängig ist. In diesem Fall kann bei der Differenzbildung von Zählerständen ein fehlerhaftes Ergebnis auftreten. Um eine korrekte Berechnung zu ermöglichen, soll bei einem Überlauf des Mastercounters für jede VCI eine Überlaufanzeige gesetzt werden. Bei der Differenzbildung kann dann diese Überlaufanzeige berücksichtigt werden. Diese Überlaufanzeige ist in einer bevorzugten Ausführungsform nicht Bestandteil eines Policing-RAMs zur Speicherung der verbindungsindividuellen Zähler und Parameter, so daß beim Setzen der Überlaufanzeigen nicht alle VCIs einzeln adressiert werden müssen. Für die Verwaltung der Überlaufanzeigen kann beispielsweise ein gesondertes Überlaufregister verwendet werden, dessen Breite einer maximal zulässigen Anzahl von VCIs entsprechen kann, beispielsweise 2048. Alle Überlaufanzeigen dieses Überlaufregisters können beim Überlauf des Mastercounters gleichzeitig gesetzt werden. Rückgesetzt werden die einzelnen Überlaufanzeigen verbindungsindividuell beim Eintreffen einer ankommenden Verbindungszelle für die jeweilige VCI.

Bei der Bearbeitung einer ankommenden Verbindungszelle ist bei einer gesetzten Überlaufanzeige der zugeordneten VCI zunächst nicht ermittelbar, ob der Mastercounter seit der zuvor angekommenen Verbindungszelle einmal oder mehrmals übergelaufen ist. Dies kann zu Fehlern bei stark bursthaften Verbindungen führen, wenn über längere Zeit keine Verbindungszellen ankommen. Beispielsweise, falls bei einer ankommenden Verbindungszelle einer Verbindung noch unmittelbar vor einem Überlauf des zentralen Zählers ein verbindungsindividueller Überwachungszählerstand errechnet wird knapp unterhalb des verbindungsindividuellen Schwellenwertes für diese Verbindung, so sollte eine Sonderbehandlung für diese Verbindung durchgeführt werden, falls die nächstfolgende Verbindungszelle knapp nach dem unmittelbar folgenden Überlauf des zentralen Zählers ankommt. Falls jedoch erst knapp nach einem übernächsten Überlauf des zentralen Zählers diese nächstfolgende Verbindungszelle dieser Verbindung ankommt, so soll keine Sonderbehandlung erfolgen. Bei einem mehrmaligen Überlauf des Mastercounters zwischen zwei angekommenen Verbindungszellen einer Verbindung ist eine größere Zeitspanne inzwischen verstrichen, und es soll die Durchführung einer Sonderbehandlung unterbleiben. Dieses Problem einer Unterscheidung zwischen einem einzigen Überlauf und einem mehrfachen Überlauf des zentralen Zählers zur Auslösung oder Unterdrückung einer Sonderbehandlung kann auf verschiedene Weise gelöst werden.

Eine Lösung dieses Problems bei der Überwachung kann mittels einer zweiten verbindungsindividuellen Überlaufanzeige erfolgen. Diese übernimmt bei jedem Überlauf des Mastercounters den Inhalt der ersten Überlaufanzeige direkt bevor die erste Überlaufanzeige gesetzt wird. Sind bei Ankunft einer Verbindungszelle von einer Verbindung beide Überlaufanzeigen gesetzt, so kann daraus erkannt werden, daß seit der Ankunft der vorhergehenden Verbindungszelle dieser Verbindung zumindest zwei Überläufe des Mastercounters stattgefunden haben. Und dies wird dann bei der Errechnung des verbindungsindividuellen Überwachungszählerstandes für diese Verbindung entsprechend berücksichtigt. Der Überwachungszählerstand wird beispielseise Null gesetzt oder auf einen hierfür vorgesehenen Wert. Beide Überlaufanzeigen werden rückgesetzt. Es erfolgt somit keine Sonderbehandlung dieser Verbindung und die soeben angekommene Verbindungszelle wird weitergeleitet, also durchgelassen.

Bei einer weiteren Lösung wird eine kleine Ungenauigkeit häufig zugunsten des Teilnehmers zugelassen. Bei diesem Lösungsweg wird auf die zweite Überlaufanzeige komplett verzichtet. Nach einem Überlauf des Mastercounters wird in jedem Fall die nächste nachfolgend ankommende Verbindungszelle einer Verbindung durchgelassen. Eine Sonderbehandlung dieser Verbindung unterbleibt somit für die jeweils als erste nach einem Überlauf des Mastercounters nachfolgend ankommende Verbindungszelle einer Verbindung. Der verbindungsindividuelle Überwachungszählerstand verbleibt dabei unverändert und wird somit nicht neu errechnet. Lediglich die erste und einzige Überlaufanzeige dieser Verbindung wird rückgesetzt. Der Fehler bei dieser Vorgehensweise betreffend die Überwachung der Bitrate ist gering und abhängig von der Zählerbreite des Mastercounters. Bei einer größeren Zählerbreite ist dieser Fehler kleiner. Bei einer größeren Bitrate ist dieser Fehler ebenfalls kleiner. Dieser Fehler kann beispielsweise für eine Zählerbreite von 24 Binärstellen vernachlässigt werden.

In einer bevorzugten Ausführungsform der Erfindung wird der Überwachungszählerstand auf einen zweiten Grenzwert beispielsweise Null gesetzt, falls er diesen unterschreitet. Dadurch kann eine Burstlängenbegrenzung erzielt werden. Zusätzlich kann damit oder beispielsweise auch durch ein Errechnen oder ein verbindungsindividuelles Notieren eines weiteren verbindungsindividuellen Überwachungszählerstandes eine maximale Bitrate der Verbindung kontrolliert werden, bei deren Überschreitung beispielsweise eine weitere Sonderbehandlung ausgelöst werden kann, durch welche beispielsweise eine Änderung der zugeordneten Dienstklasse für diese Verbindung erfolgt, und damit also auch eine Änderung der Berechnung der Verbindungsgebühr.

Bei einer Anwendung des erfindungsgemäßen Verfahrens ist beispielsweise nur ein zentraler Zähltakt vorgesehen, in welchem nur ein zentraler Zähler gezählt wird, dessen Zählerstand für alle zu überwachenden virtuellen Verbindungen verwendet wird.

Beispielsweise beim Verbindungsaufbau einer virtuellen Verbindung wird dieser Verbindung eine VCI zugeordnet. Zu jeder dieser VCIs gibt es beispielsweise in einem RAM eine Tabelle von verbindungsindividuellen Einträgen beispielsweise in Form je eines Datenfeldes. Dieses enthält beispielsweise die Parameter der Verbindung, also insbesondere den Schwellenwert, den mittleren Zellenabstand, sowie den Überwachungszählerstand und den Zählerstand des zentralen Zählers bei einer zuletzt erfolgten Ankunft einer Verbindungszelle. Zu jeder dieser VCIs wird die erste und häufig einzige Überlaufanzeige beispielsweise in einem gesonderten Überlaufregister verwaltet, welches beispielsweise die Überlaufanzeigen von allen VCIs enthält.

Beispielsweise beim Verbindungsaufbau wird für die Verbindung eines Teilnehmers die Dienstklasse festgelegt, und damit die mittlere Bitrate und die maximale Bitrate. Ebenso festgelegt ist entsprechend der Dienstklasse auch ein mittlerer zeitlicher Abstand von Verbindungszellen dieser Verbindung für eine Errechnung des Überwachungszählerstandes. Beispielsweise kann dieser mittlere Abstand ermittelt werden aus der totalen Bitrate der Anschlußleitung, also falls lückenlos ohne Abstand die Verbindungszellen ankommen, und der mittleren Bitrate der Anschlußleitung für die angemeldete Dienstklasse.

Beispielsweise kann der zentrale Zähltakt gleichzeitig sein mit den ankommenden Verbindungszellen bei der totalen Bitrate. Ebenso kann beispielsweise nur ein einziger zentraler Zähler verwendet werden, welcher beim Zähltakt jeweils beispielsweise um einen Zählwert gleich Eins erhöht wird. In diesem Fall können Verbindungen aller Dienstklassen überwacht werden. Es kann der durchschnittliche mittlere Abstand bei einer mittleren Bitrate sowie der durchschnittliche minimale Abstand bei einer maximalen Bitrate auf einfache Weise errechnet werden gemäß folgender Formeln:

$$\text{mittlerer Abstand} = \frac{\text{totale Bitrate}}{\text{mittlere Bitrate}}$$

$$\text{minimaler Abstand} = \frac{\text{totale Bitrate}}{\text{maximale Bitrate}}$$

Beispielsweise bei einer totalen Bitrate von 64 MBit/sec und einer mittleren Bitrate von 64 kBit/sec ergibt sich ein durchschnittlicher mittlerer Abstand von 1000. Dies bedeutet für diesen Fall, daß nach einer angekommenen Verbindungszelle normalerweise Lücken ohne ankommende Verbindungszellen folgen werden. Durchschnittlich, also im Mittel, folgt anstelle der 1000sten Lücke die nächste ankommende Verbindungszelle dieser Verbindung. Bei einer maximalen Bitrate von beispielsweise 2 MBit/sec ergibt sich ein durchschnittlicher minimaler Abstand von 32. Bei der maximalen Bitrate folgen nach einer angekommenen Verbindungszelle normalerweise Lücken ohne ankommende Verbindungszellen dieser Verbindung, und erst durchschnittlich anstelle der 32sten Lücke folgt die nächste ankommende Verbindungszelle dieser Verbindung.

Definiert man beispielsweise für eine Erkennung von zu überwachenden Bursts eine sog. Burstanzahl von aufeinanderfolgen-Verbindungszellen bei maximaler Bitrate, so kann daraus der Schwellenwert definiert werden gemäß folgender Formel:

$$\text{Schwellenwert} = (\text{Burstanzahl}) \cdot (\text{Burstzählwert})$$

Als sog. Burstzählwert gilt dabei jener Zählwert, um welchen der Überwachungszählerstand bei der maximalen Bitrate für jede ankommende Verbindungszelle weitergezählt wird. Spätestens nach einer Burstanzahl von angekommenen Verbindungszellen bei maximaler Bitrate soll spätestens der Schwellenwert erreicht sein. Bei jeder ankommenden Verbindungszelle soll der Überwachungszählerstand gemäß der mittleren Bitrate um den mittleren Abstand weitergezählt werden, reduziert um den aktuellen Abstand, welcher mittels der Zählerstanddifferenz des zentralen Zählers ermittelt wird, also jener Anzahl von Zähltakten des zentralen Zählers innerhalb der Zeitspanne zwischen der aktuellen angekommenen Verbindungszelle und der davor angekommenen Verbindungszelle. Bei der maximalen Bitrate ist dies der minimale Abstand.

Der Burstzählwert kann somit errechnet werden gemäß folgender Formel:

$$\text{Burstzählwert} = (\text{mittlerer Abstand}) - (\text{minimaler Abstand})$$

Auf diesem Wege ist der Schwellenwert als ein erster Grenzwert definierbar, bei dessen Überschreitung durch den überwachungszählerstand eine Sonderbehandlung der jeweiligen Verbindung erfolgen soll.

Es kann beispielsweise in einer bevorzugten Ausführungsform ein zentraler Zähltakt verwendet werden, welcher nicht gleichzeitig mit jeder ankommenden Verbindungszelle bei der totalen Bitrate weitergezählt wird, sondern jeweils erst nach einer bestimmten Zellentaktanzahl. Der zentrale Zähler kann dabei um einen bestimmten Zählwert weitergezählt werden, beispielsweise hochgezählt werden. In diesem Fall kann der mittlere Abstand ebenso wie der minimale Abstand als bezogen auf den zentralen Zähltakt mit Berücksichtigung des Zählwertes definiert werden gemäß folgender Formeln:

$$\text{mittlerer Abstand} = \frac{\text{totale Bitrate}}{\text{mittlere Bitrate}} \cdot \frac{\text{Zählwert}}{\text{Zellentaktzahl}}$$

$$minimaler\ Abstand = \frac{totale\ Bitrate}{maximale\ Bitrate} \cdot \frac{Z\ddot{a}hlwert}{Zellentaktzahl}$$

Diese Werte können beispielsweise, wie alle errechneten Werte, zugunsten des Teilnehmers gerundet werden, und sollen bei der Berechnung des Burstzählwertes und damit des Schwellenwertes verwendet werden. Der zu errechnende und zu kontrollierende Überwachungszählerstand kann dann ebenso als bezogen auf den zentralen Zähltakt gelten. Dieser kann aus dem verbindungsindividuell notierten alten Überwachungszählerstand ÜZA, aus dem verbindungsindividuell notierten alten Zählerstand ZZA des zentralen Zählers dem aktuell abgelesenen neuen Zählerstand ZZN des zentralen Zählers, und dem mittleren Abstand MA, als neuer Überwachungszählerstand ÜZN gemäß folgender Formel errechnet werden:

$$ÜZN = ÜZA + MA - (ZZN - ZZA)$$

Die Differenzbildung des alten und neuen Zählerstandes des zentralen Zählers soll als eine Zählerstanddifferenz ZZD des zentralen Zählers definiert werden gemäß folgender Formel:

$$ZZD = ZZN - ZZA$$

Diese Zählerstanddifferenz ZZD soll den aktuellen Abstand zwischen den beiden zuletzt angekommenen Verbindungszellen entsprechen. Weiters soll eine Abweichung ABW dieses aktuellen Abstandes vom mittleren Abstand MA definiert werden gemäß folgender Formel:

$$ABW = MA - ZZD$$

Der neue Überwachungszählerstand ÜZN ist demnach als eine Summenbildung dieser Abweichung ABW mit dem alten überwachungszählerstand ÜZA definiert gemäß folgender Formel:

$$ÜZN = ÜZA + ABW$$

Demnach kann der Überwachungszählerstand als eine Aufsummierung von Abweichungen ABW jeweils des aktuellen Abstandes vom mittleren Abstand zwischen den angekommenen Verbindungszellen aufgefaßt werden.

Der neu errechnete Überwachungszählerstand ÜZN soll in einer bevorzugten Ausführungsform zur Burstlängenbegrenzung auf beispielsweise Null als einen zweiten Grenzwert gesetzt werden, falls er kleiner als dieser errechnet wird.

Dieser neu errechnete Überwachungszählerstand soll auf ein Überschreiten des Schwellenwertes SW überprüft werden. Davor soll jedoch die Überlaufanzeige geprüft und danach rückgesetzt werden. Bei einer gesetzt gewesenen einzigen verbindungsindividuell verwendeten überlaufanzeige, also beispielsweise ÜANZ = 1, soll eine Sonderbehandlung der Verbindung unterbleiben. Der Überwachungszählerstand soll unverändert verbleiben und es soll der aktuelle Zählerstand des zentralen Zählers notiert verbleiben.

Im Falle ÜANZ = 1:  
ÜANZ = 0,  
ÜZA = ÜZA,  
ZZA = ZZN.

Die soeben angekommene Verbindungszelle soll weitergeleitet werden.

Falls die Überlaufanzeige nicht gesetzt gewesen ist, also beispielsweise ÜANZ = 0, und falls ein Überschreiten des Schwellenwertes nicht gegeben ist, soll der Überwachungszählerstand neu errechnet werden und notiert verbleiben, und der aktuelle Zählerstand des zentralen Zählers soll notiert verbleiben.

Im Falle ÜANZ = 0 und ÜZN $\neq$ SW:  
ÜZA = ÜZN  
ZZA = ZZN

In diesem Fall wird die soeben angekommene Verbindungszelle weitergeleitet.

Anderenfalls erfolgt eine Sonderbehandlung.

Nachfolgend wird die Erfindung anhand der Figuren näher erläutert, in welchen ein Ausführungsbeispiel dargestellt ist.

Die Figur 1 zeigt ein Ausführungsbeispiel eines Flußdiagramms zur Ausführung des erfindungsgemäßen Verfahrens.

Die Figur 2 zeigt ein Ausführungsbeispiel eines Flußdiagrams zur Ausführung des Überwachungsprogramms des erfindungsgemäßen Verfahrens.

Die Figur 3 zeigt einen Netzknoten in einem ATM-Netz zur erfindungsgemäßen Durchführung einer Policing-Funktion.

Die Figur 4 zeigt einen zeitlichen Ablauf mit zwei ankommenden Verbindungszellen derselben virtuellen Verbindung und mit einer Darstellung von erfindungsgemäßen Datenfeldern.

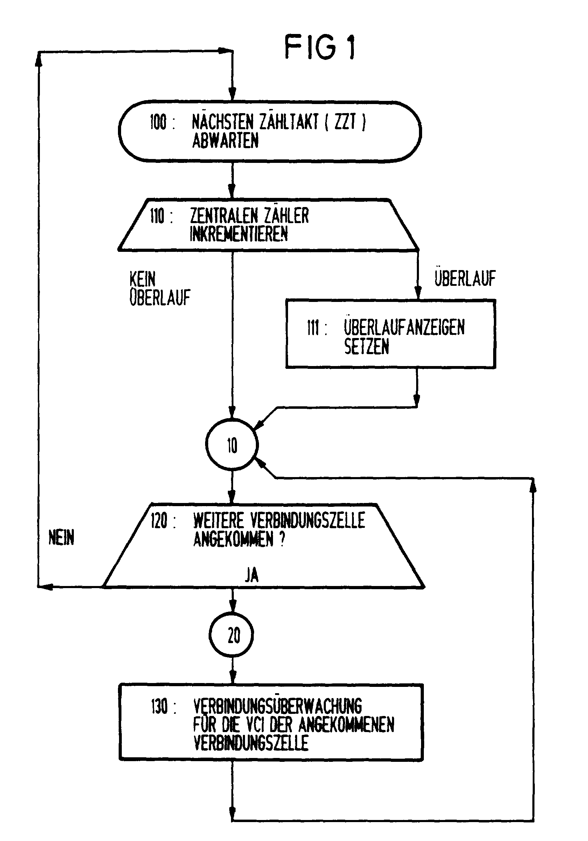

Wie die Figur 1 zeigt, wird beim erfindungsgemäßen Verfahren zunächst der nächste Zähltakt zum Weiterzählen des zentralen Zählers abgewartet in einem Programmabschnitt 100.

Mit dem Zähltakt folgt der Programmabschnitt 110. Der zentrale Zähler wird um einen Zählwert erhöht, beispielsweise um Eins hochgezählt. Falls dabei ein Überlauf des zentralen Zählers erfolgt, so folgt der Programmabschnitt 111, anderenfalls folgt der Programmabschnitt 120. Bei einem Überlauf des zentralen Zählers werden im Programmabschnitt 111 alle Überlaufanzeigen beispielsweise eines Überlaufregisters gesetzt, und der zentrale Zähler verbleibt mit einem Zählerstand gleich Null. Es folgt der Programmabschnitt 120. Es wird untersucht, ob weitere Verbindungszellen von virtuellen Verbindungen angekommen sind, für welche die Bitrate zu überwachen ist. Einzeln wird für jede der angekommenen und noch nicht geprüften Verbindungszellen jeweils das Überwachungsprogramm des Programmabschnittes 130 ausgeführt. Falls für alle angekommenen Verbindungszellen das Überwachungsprogramm des Programmabschnittes 130 durchgeführt ist, folgt der Programmabschnitt 100, und es wird, wie bereits erläutert, der nächste Zähltakt des zentralen Zählers abgewartet.

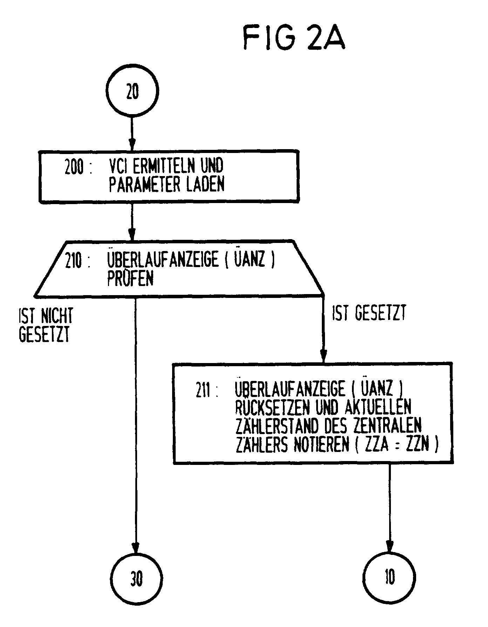

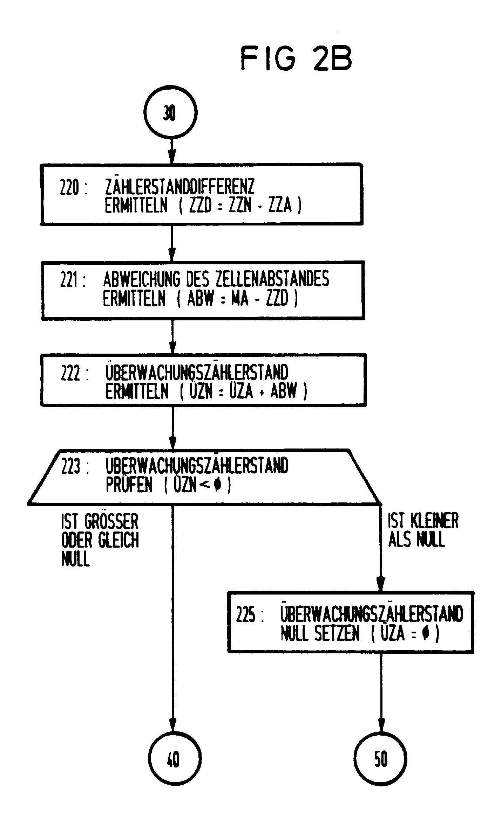

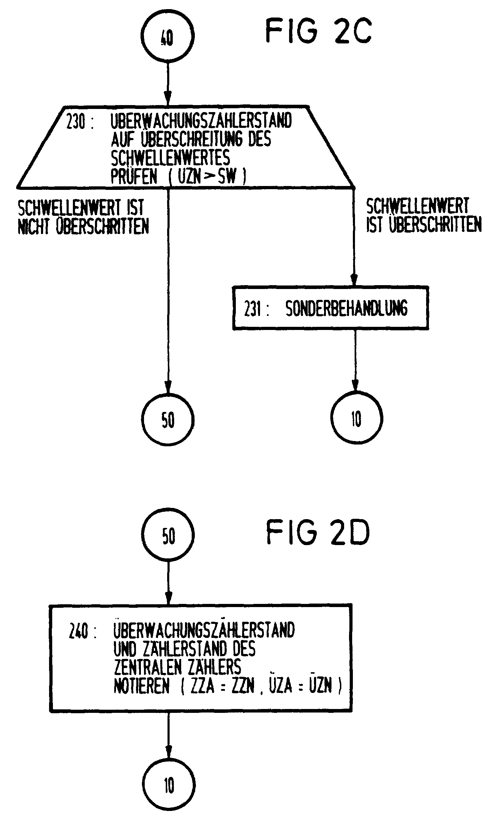

Wie die Figur 2 zeigt, welche die Figur 1 ergänzt und aus den Figuren 2A, 2B, 2C und 2D zusammenzufügen ist, besteht ein Ausführungsbeispiel für dieses Überwachungsprogramm des Programmabschnittes 130 aus mehreren Programmabschnitten 200 bis 240. Das Zusammenfügen der genannten Programmabschnitte von Figur 1 und Figur 2 ist anhand von in diesen Figuren anangegebenen Programmkonnektoren 10, 20, 30, 40 und 50 vorzunehmen.

Für eine angekommene und bezüglich der Bitrate der Verbindung zu überwachende Verbindungszelle wird dieses Überwachungsprogramm mit einem Programmabschnitt 200 begonnen. Es wird die VCI für diese Verbindung ermittelt. Entsprechend dieser VCI werden die verbindungsindividuellen Parameter dieser Verbindung geladen. Danach folgt der Programmabschnitt 210. Es wird geprüft, ob für diese Verbindung eine erste und einzige vorgesehene verbindungsindividuelle Überlaufanzeige ÜANZ gesetzt ist. Falls dies der Fall ist, folgt der Programmabschnitt 211, anderenfalls folgt der Programmabschnitt 220.

Bei gesetzter Überlaufanzeige ÜANZ folgt der Programmabschnitt 211. Die Überlaufanzeige ÜANZ wird rückgesetzt. Der aktuelle Zählerstand ZZN des zentralen Zählers wird notiert. Die angekommene Verbindungszelle wird weitergeleitet und es folgt erneut der Programmabschnitt 120.

Bei nicht gesetzter Überlaufanzeige ÜANZ folgt der Programmabschnitt 220.

Es wird die Zählerstanddifferenz ZZD des zentralen Zählers ermittelt, indem vom neuen Zählerstand ZZN des zentralen Zählers der alte Zählerstand ZZA subtrahiert wird, gemäß

$$ZZD = ZZN - ZZA$$

Danach folgt der Programmabschnitt 221. Es wird eine Abweichung ABW ermittelt, indem von einem mittleren Zellenabstand MA die Zählerstanddifferenz ZZD substrahiert wird, gemäß:

$$ABW = MA - ZZD$$

Danach folgt der Programmabschnitt 222. Es wird der neue Überwachungszählerstand ÜZN ermittelt, indem die soeben ermittelte Abweichung ABW zum alten Überwachungszählerstand ÜZA addiert wird; gemäß

$$ÜZN = ÜZA + ABW$$

Danach folgt der Programmabschnitt 223. Es wird geprüft, ob der soeben ermittelte neue Überwachungszählerstand ÜZN kleiner Null ist.

Falls dies der Fall ist, folgt der Programmabschnitt 225, anderenfalls folgt der Programmabschnitt 230.

Falls der neue Überwachungszählerstand ÜZN kleiner Null ist, folgt der Programmabschnitt 225. Der neue Überwachungszählerstand ÜZN wird zur Burstlängenbegrenzung gleich Null gesetzt, und es folgt der Programmabschnitt 240.

Falls der neue Überwachungszählerstand ÜZN größer oder gleich Null ist, folgt der Programmabschnitt 230. Der neue Überwachungszählerstand ÜZN wird auf eine Überschreitung des Schwe-Schwellenwertes SW überprüft gemäß:

$$SW \lessgtr ÜZN$$

Falls der neue Überwachungszählerstand ÜZN größer ist als der Schwellenwert SW, also eine Überschreitung vorliegt, folgt der Programmabschnitt 231, anderenfalls folgt der Programmabschnitt 240.

Falls eine Überschreitung vorliegt, folgt der Programmabschnitt 231. Es wird eine Sonderbehandlung durchgeführt. Danach folgt der Programmabschnitt 120.

Falls keine Überschreitung vorliegt, folgt der Programmabschnitt 240. Es wird der neue Überwachungszählerstand ÜZN und der Zählerstand ZZN des zentralen Zählers notiert gemäß:

$$ÜZA = ÜZN$$
$$ZZA = ZZN$$

Die angekommene Verbindungszelle wird weitergeleitet. Es folgt erneut der Programmabschnitt 120.

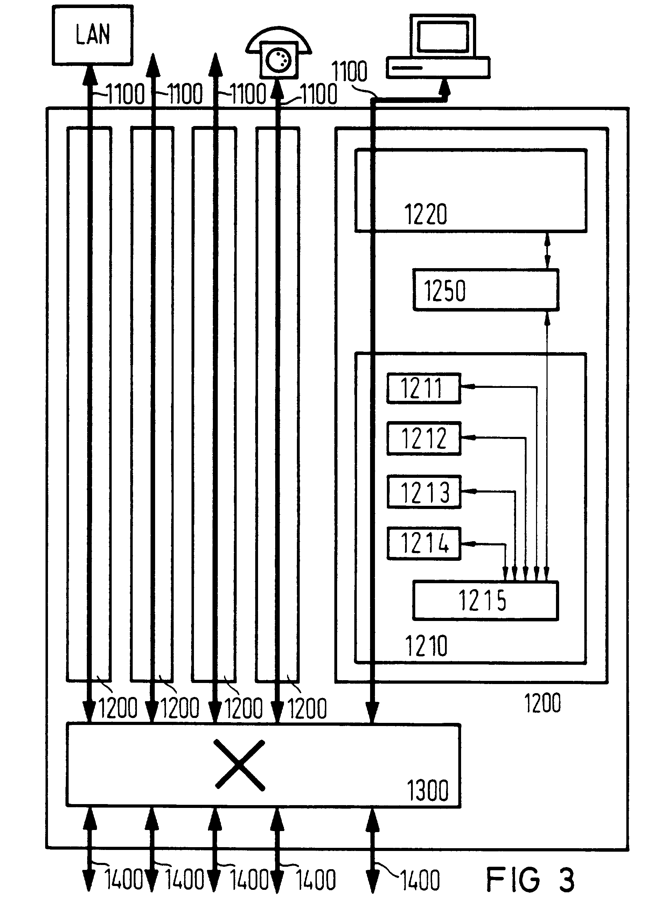

Wie die Figur 3 zeigt, besteht ein Netzknoten 1000 in einem ATM-Netz zur erfindungsgemäßen Durchführung einer Policing-Funktion aus mehreren Anschlußleitungen 1100 als Übertragungsstrecken, deren jede über einen eigenen Zugangsbauteil 1200 einem Koppelfeld 1300 zugeführt wird. In jedem Zugangsbauteil 1200 ist je ein Überwachungsbauteil 1210 zur Durchführung der Policing-Funktion vorgesehen. Ebenso ist in jedem Zugangsbauteil 1200 je ein Identifizierungsbauteil 1220 vorgesehen zur Identifizierung der einzelnen virtuellen Verbindungen auf der jeweiligen Anschlußleitung 1100 sowie ihrer auf dieser Übertragungsstrecke ankommenden Verbindungszellen, welche über das Koppelfeld 1300 des Netzknotens 1000 geführt werden und so auf weiteren Übertragungsstrecken 1400 weitergeleitet werden sollen. Eine jeweilige Identifizierungsinformation von Verbindungszellen von virtuellen Verbindungen, welche jeweils von einer der Übertragungsstrecken 1100 über das Koppelfeld 1300 zu einer der Übertragungsstrecken 1400 aufgebaut sind, soll einerseits auf einer Übertragungsstrecke 1100 vor dem Netzknoten 1000 und ebenso auf einer Übertragungsstrecke 1400 nach dem Netzknoten 1000 die jeweilige virtuelle Verbindung kennzeichnen und individuell erkennbar machen. Die jeweilige Identifizierungsinformation kann vor dem Netzknoten und nach dem Netzknoten auch unterschiedlich sein.

Beispielsweise im Tagungsbericht der CCITT Studienkommission XVIII, Juni 1989, Genf, ist ein Format für eine Verbindungszelle angegeben, welches 28 Bit für die Identifizierungsinformation aufweist. Auf einer Anschlußleitung mit einer totalen Bitrate von beispielsweise 140 MBit/sec sollen gleichzeitig 2048 oder 4096 einzelne virtuelle Verbindungen gleichzeitig zugelassen werden. Der Zugangsbauteil dieser Anschlußleitung soll demnach 2048/4096 virtuelle Verbindungen gleichzeitig bearbeiten können, und diese in seinen Datenfeldern verbindungsindividuell adressieren können. Jedes dieser 2048 / 4096 Datenfelder soll demnach einer von den $2^{28}$ Identifizierungsinformationen zuordenbar sein. Im Zugangsbauteil soll eine Umwertung erfolgen einer ankommenden Identifizierungsinformation von 28 Bit in eine interne Adresse von 11/12 Bit, welche intern im jeweiligen Zugangsbauteil als Adresse verwendet wird.

Beispielsweise bei einer ausgefallenen oder überlasteten Übertragungsstrecke kann in der Identifizierungsinformation ein besonderer Verbindungsweg markierbar sein. Beispielsweise kann in der Identifzierungsinformation von 28 Bit zusätzlich zu einer VCI (Virtual Channel Idenifier) eine VPI (Virtual Path Identifier) enthalten sein. Im Zugangsbauteil soll dies beachtet werden. Für die Bestimmung der internen VCI ist dies von keiner grundsätzlichen Bedeutung.

Der Überwachungsbauteil 1210 kann auch in den Identifizierungsbauteil 1220 integriert sein. In jedem Fall kann weiters ein eigener Umwertebauteil 1250 vorgesehen sein, welcher aus der vom Identifizierungsbauteil 1220 erhaltenen angekommenen Identifizierungsinformation von 28 Bit etwa anhand einer Umwertetabelle die jeweilige interne VCI für die angekommene Verbindungszelle erzeugt, und diese dem Überwachungsbauteil 1210 und dem Identifizierungsbauteil 1220 zuführt.

Wie bereits erläutert, ist bei diesem Ausführungsbeispiel für jede der Übertragungsstrecken 1100 je ein eigener Überwachungsbauteil 1210 im jeweiligen Zugangsbauteil 1200 vorgesehen.

Jeder dieser Überwachungsbauteile 1210 enthält seinen eigenen Zähltaktbauteil 1211, in welchem der zentrale Zähltakt erzeugt wird zum Zählen des zentralen Zählers. Der zentrale Zähler soll bei diesem Ausführungsbeispiel in Zeitintervallen von etwa 3 μsec weitergezählt werden. Dies ist abgestimmt bei einer totalen Bitrate von 140 MBit/sec auf lückenlos aufeinanderfolgend ankommende Verbindungszellen einer Zellenlänge von insgeldentifizierungsinformationen zuordenbar sein. Im Zugangsbauteil soll eine Umwertung erfolgen einer ankommenden Identifizierungsinformation von 28 Bit in eine interne Adresse von 11/12 Bit, welche intern im jeweiligen Zugangsbauteil als Adresse verwendet wird.

Beispielsweise bei einer ausgefallenen oder überlasteten Übertragungsstrecke kann in der Identifizierungsinformation ein besonderer Verbindungsweg markierbar sein. Beispielsweise kann in der Identifzierungsinformation von 28 Bit zusätzlich zu einer VCI (Virtual Channel Idenifier) eine VPI (Virtual Path Identifier) enthalten sein. Im Zugangsbauteil soll dies beachtet werden. Für die Bestimmung der internen VCI ist dies von keiner grundsätzlichen Bedeutung.

Der Überwachungsbauteil 1210 kann auch in den Identifizierungsbauteil 1220 integriert sein. In jedem Fall kann weiters ein eigener Umwertebauteil 1250 vorgesehen sein, welcher aus der vom Identifizierungsbauteil 1220 erhaltenen angekommenen Identifizierungsinformation von 28 Bit etwa anhand einer Umwertetabelle die jeweilige interne VCI für die angekommene Verbindungszelle erzeugt, und diese dem Überwachungsbauteil 1210 und dem Identifizierungsbauteil 1220 zuführt.

Wie bereits erläutert, ist bei diesem Ausführungsbeispiel für jede der Übertragungsstrecken 1100 je ein eigener überwachungsbauteil 1210 im jeweiligen Zugangsbauteil 1200 vorgesehen.

Jeder dieser Überwachungsbauteile 1210 enthält seinen eigenen Zähltaktbauteil 1211, in welchem der zentrale Zähltakt erzeugt wird zum Zählen des zentralen Zählers. Der zentrale Zähler soll bei diesem Ausführungsbeispiel in Zeitintervallen von etwa 3 μsec weitergezählt werden. Dies ist abgestimmt bei einer totalen Bitrate von 140 MBit/sec auf lückenlos aufeinanderfolgend ankommende Verbindungszellen einer Zellenlänge von insgesamt 53 Byte, welche auf der Übertragungsstrecke mit einer Taktrate von etwa 150 MBit/sec übertragen werden sollen.

Ebenso enthält jeder der Überwachungsbauteile 1210 seinen eigenen Speicherbauteil 1213, welcher als Policing-RAM verwendet wird. Für jede der 2048 Adressen ist ein eigener Datenblock vorgesehen, in welchem für die jeweilige VCI der Zählerstand des zentralen Zählers, der Überwachungszählerstand, der Schwellenwert und der mittlere Zellenabstand notiert werden sollen.

Ebenso enthält der Überwachungsbauteil 1210 sein eigenes überlaufregister 1212, welches für jede der 2048 internen VCI's eine adressierbare Überlaufanzeige enthält, welche einzeln gelesen und gelöscht werden kann. Bei einem Überlauf des zentralen Zählers können alle 2048 Anzeigen des Überlaufregisters 1212 auf einmal gesetzt werden.

Ebenso enthält der Überwachungsbauteil 1210 seinen eigenen Steuerungsbauteil 1215, in welchem die in den Figuren 1 und 2 dargestellten Abläufe ausgeführt werden. Dieser erhält vom Zähltaktbaustein 1211 den zentralen Zähltakt. Ebenso erhält er vom Umwertebauteil 1250 die interne VCI der zuletzt angekommenen Verbindungszelle. Mit der internen VCI adressiert er im Speicherbaustein 1215 die verbindungsindividuellen Daten und Parameter dieser internen VCI. Mit der internen VCI adressiert er ebenso die Überlaufanzeige dieser internen VCI im Überlaufregister 1212.

Sowie der Steuerungsbauteil 1215 vom Zähltaktbauteil 1211 einen zentralen Zähltakt erhält, greift der Steuerungsbauteil 1215 auf einen Zählerbauteil 1214 zu. Bei diesem Ausführungsbeispiel enthält der Zählerbauteil 1214 ein binäres Zählregister mit 24 Binärstellen als zentralen Zähler. Dieses wird dabei inkrementiert, also um 1 weiter gezählt, und gelesen. Für den Fall, daß dabei ein Überlauf des zentralen Zählers festgestellt wird, greift der Steuerungsbauteil 1215 auf das Überlaufregister 1212 zu, und setzt dort auf einmal alle 2048 Anzeigen. Anschließend überprüft der Steuerungsbauteil 1215, ob der Umwertebauteil 1250 eine angekommene Verbindungszelle anzeigt. Falls dies der Fall ist, wird die interne VCI vom Umwertebauteil 1250 erhalten, und für diese VCI wird, wie insbesondere anhand von Figur 2 erläutert ist, das überwachungsprogramm ausgeführt. Dabei wird, falls die Sonderbehandlung erforderlich ist, die Zelle verworfen.

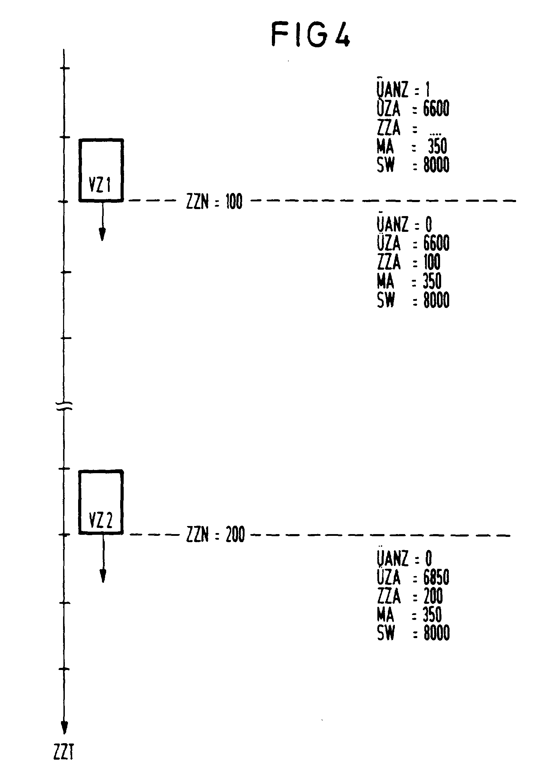

Wie die Figur 4 zeigt, ist der zeitliche Ablauf für zwei ankommende Verbindungszellen VZ1, VZ2 von derselben virtuellen Verbindung entlang einer Zeitachse dargestellt, auf welcher zentrale Zähltakte ZZT für den zentralen Zähler markiert sind. Beim Ankommen der ersten Verbindungszelle VZ1 wird bei diesem Ausführungsbeispiel als neuer Zählerstand ZZN des zentralen Zählers sein Wert ZZN = 100 erhalten. Für die interne VCI dieser Verbindung wird ihre Überlaufanzeige ÜANZ gelesen. Diese ist beispielsweise gesetzt. Die Überlaufanzeige wird gelöscht. Mit der internen VCI werden die verbindungsindividuellen Daten adressiert. Lediglich der neue Zählerstand ZZN des zentralen Zählers wird als alter Zählerstand für eine nachfolgende ankommende Verbindungszelle VZ2 notiert. Der alte Überwachungszählerstand ÜZA wird nicht verändert und verbleibt notiert bis zur nächstfolgenden ankommenden Verbindungszelle VZ2 dieser virtuellen Verbindung.

Nach weiteren 100 Zähltakten ZZT wird beim Ankommen der nächsten Verbindungszelle VZ2 dieser virtuellen Verbindung als neuer Zählerstand ZZN des zentralen Zählers sein Wert mit ZZN = 200 erhalten. Für die interne VCI dieser Verbindung wird ihre Überlaufanzeige ÜANZ gelesen. Diese ist jetzt nicht gesetzt. Mit der internen VCI werden die verbindungsindividuellen Daten adressiert. Es wird ein neuer Überwachungszählerstand ÜZN errechnet, wie bereits erläutert, gemäß der Formel:

$$\ddot{U}ZN = \ddot{U}ZA + MA - ZZN + ZZA =$$
$$= 6600 + 350 - 200 + 100 =$$
$$= 6850$$

Es wird geprüft, ob der neue Überwachungszählerstand ÜZN größer ist als der Schwellenwert SW = 8000. Dies ist nicht der Fall. Demzufolge wird der neue Überwachungszählerstand ÜZN als alter Überwachungszählerstand ÜZA für eine weitere nächstfolgend ankommende Verbindungszelle VZ2 notiert. Ebenso wird der neue Zählerstand ZZN des zentralen Zählers für die weitere nächstfolgend ankommende Verbindungszelle VZ2 als alter Zählerstand ZZA des zentralen Zählers notiert.

Auf diese Weise wird bei diesem Ausführungsbeispiel eine mittlere Bitrate für diese virtuelle Verbindung überwacht. Als Parameter werden der mittlere Abstand MA = 350 und der Schwellenwert SW = 8000 verwendet. Durch den mittleren Abstand MA = 350 ist die zu überwachende Bitrate vorgegeben, welche ausgehend von einer totalen Bitrate von 140 MBit/sec gemäß einer Division durch 350 mit einem Wert von 400 kBit/sec für die vorgegebene zu überwachende mittlere Bitrate festgelegt ist. Diese wird, wie bereits erläutert, anhand des Überwachungszählerstandes kontrolliert, welcher als eine Aufsummierung aller Abweichungen von der mittleren Bitrate angesehen werden kann, und bei jeder ankommenden Verbindungszelle neu errechnet wird, indem die Abweichung des Abstandes zwischen den beiden zuletzt angekommenen Verbindungszellen addiert wird. Diese Abweichung kann positiv sein, wie in dem in Figur 4 dargestellten Fallbeispiel, und dadurch den Überwachungszählerstand erhöhen, falls der Abstand zwischen den beiden zuletzt angekommenen Verbindungszellen kleiner ist als der vorgegebene mittlere Abstand, oder negativ sein, falls der Abstand größer ist als der vorgegebene mittlere Abstand.

Beispielsweise bei einem Abstand von 9000 Zähltakten ZZT zwischen zwei angekommenen Verbindungszellen, also einer Zählerstanddifferenz

$$ZZD = ZZN - ZZA = 900$$

für den jeweiligen Zählerstand des zentralen Zählers jeweils bei den beiden angekommenen Verbindungszellen, erhält man eine Abweichung

$$ABW = MA - ZZN + ZZA =$$
$$= MA - ZZD =$$
$$= 350 - 9000 =$$
$$= -8650$$

und ein neuer Überwachungszählerstand wird errechnet gemäß:

$$\ddot{U}ZN = \ddot{U}ZA + MA - ZZN + ZZA =$$
$$= \ddot{U}ZA + MA - ZZD =$$
$$= \ddot{U}ZA + ABW =$$

$$= \text{ÜZA} - 8650$$

Vorausgesetzt, der alte Überwachungszählerstand ÜZA ist kleiner als der Schwellenwert SW = 8000, so erhält der neue Überwachungszählerstand einen negativen Wert.

Zur Verschärfung einer Burstlängenbegrenzung soll dies nicht zugelassen werden. Sollte der Überwachungszählerstand einen Grenzwert unterschreiten, in diesem Ausführungsbeispiel den Wert Null, so soll er auf diesen Grenzwert gesetzt werden. In diesem Ausführungsbeispiel wird in diesem Fall der Überwachungszählerstand gleich Null gesetzt.

$$\text{ÜZA} = \text{ÜZN} = 0$$

Falls jetzt beispielsweise 23 Verbindungszellen dieser selben virtuellen Verbindung unmittelbar nacheinander ankommen, also jede zum jeweils nächstfolgenden Zähltakt ZZT, so beträgt jedesmal die Zählerstanddifferenz ZZD des zentralen Zählers den Wert Eins, gemäß:

$$\text{ZZD} = \text{ZZN} - \text{ZZA} = 1$$

Und die Abweichung ABW beträgt demzufolge jedesmal

$$\text{ABW} = \text{MA} - \text{ZZN} + \text{ZZA} =$$
$$= \text{MA} - \text{ZZD} =$$
$$= 350 - 1 =$$
$$= 349$$

Und jedesmal wird bei einer der unmittelbar nacheinander ankommenden Verbindungszellen der Überwachungszählerstand um den Wert der Abweichung ABW = 349 erhöht, gemäß:

$$\text{ÜZN} = \text{ÜZA} + \text{MA} - \text{ZZN} + \text{ZZA} =$$
$$= \text{ÜZA} + \text{MA} - \text{ZZD} =$$
$$= \text{ÜZA} + \text{ABW} =$$
$$= \text{ÜZA} + 349$$

Ausgehend von einem alten Überwachungszählerstand ÜZA = 0 bei der ersten dieser unmittelbar nacheinander ankommenden Verbindungszellen, erhält der neue Überwachungszählerstand ÜZN bei der 23.ten unmittelbar nacheinander angekommenen Verbindungszelle den Wert 23 mal 349, gemäß:

$$\text{ÜZN} = 0 + 23 \text{ mal } 349 = 8027$$

Und es zeigt sich, daß dieser Wert des neuen Überwachungszählerstandes ÜZN jetzt größer ist als der Schwellenwert SW = 8000. Für diese virtuelle Verbindung ist jetzt die Sonderbehandlung durchzuführen. Bei diesem Ausführungsbeispiel wird als Sonderbehandlung die virtuelle Verbindung abgebrochen.

In diesem Fall liegt ein Burst vor, mit einer maximalen Bitrate von 140 MBit/sec. Gemäß einer vorgegebenen mittleren Bitrate von 400 kBit/sec liegt eine 350-fache Überschreitung der mittleren Bitrate vor, und nach spätestens einer Burstanzahl von 23 Verbindungszellen mit einem Burstzählwert von 349 wird diese virtuelle Verbindung abgebrochen. Bei einem Zähltakt ZZT von jeweils ungefähr 3 µsec wird in diesem Fall spätestens nach etwa 70 µsec abgebrochen.

Betrachtet man einen anderen Fall, bei welchem ausgehend von einem Überwachungszählerstand gleich Null nacheinander mindestens 8000 Verbindungszellen ankommen, jeweils mit einem konstanten Abstand von 349 Zähltakten, so wird als Zählerstanddifferenz ZZD des zentralen Zählers dabei jeweils der Wert 349 erhalten, gemäß

$$\text{ZZD} = \text{ZZN} - \text{ZZA} = 349$$

und die Abweichung ABW beträgt demzufolge jedesmal

$$\text{ABW} = \text{MA} - \text{ZZD} = 350 - 349 = 1.$$

Und jedesmal wird bei einer der stets jeweils nach 349 Zähltakten ZZT ankommenden Verbindungszellen der Überwachungszählerstand um den Wert der Abweichung ABW = 1 erhöht, gemäß:

$$\text{ÜZN} = \text{ÜZA} + \text{ABW} = \text{ÜZA} + 1.$$

Ausgehend von einem alten Überwachungszählerstand ÜZA = 0 bei der ersten dieser jeweils im Abstand von 349 Zähltakten ZZT ankommenden Verbindungszellen erhält der neue Überwachungszählerstand ÜZN bei der 8001.ten angekommenen Verbindungszelle den Wert 8001, gemäß:

$$\text{ÜZN} = 0 + 1 \text{ mal } 8001 = 8001$$

Und es zeigt sich, daß dieser Wert des neuen überwachungszählerstandes ÜZN jetzt größer ist als der Schwellenwert SW = 8000. Für diese virtuelle Verbindung ist jetzt die Sonderbehandlung durchzuführen. Diese virtuelle Verbindung ist jetzt abzubrechen.

In diesem Fall liegt eine dauernde geringfügige Überschreitung der vorgegebenen mittleren Bitrate von 400 kBit/sec vor. In diesem Fall beträgt die Überschreitung weniger als 0,3%. Auf Dauer wird diese Überschreitung nicht zugelassen, und spätestens nach einer Zeitspanne von 349 mal 8001 mal 3 µsec wird diese virtuelle Verbindung unterbrochen, also nach ungefähr 8,4 sec..

Sollte der zentrale Zähler dabei einen Überlauf aufweisen, welcher bei einem 24-Bit-Zählregister jeweils nach 16 777 216 Zähltakten ZZT auftritt, so erfolgt beim letzten Fallbeispiel der Abbruch der virtuellen Verbindung erst nach 8002 angekommenen Verbindungszellen dieser virtuellen Verbindung. Man erkennt, daß dies zugunsten des Teilnehmers nur eine geringfügige Ungenauigkeit ist von etwa 0,01%. Beim vorhergehenden Fallbeispiel des 350-fachen Bursts erfolgt bei einem währenddessen auftretenden Überlauf des zentralen Zählers der Abbruch der Verbindung erst nach 24 angekommenen Verbindungszellen. Die Ungenauigkeit zugunsten des Teilnehmers ist etwa 4%. Diese Ungenauigkeit tritt jedoch nur mit einer Wahrscheinlichkeit von etwa 0,000 000 06 auf.

Auf diese Weise können Bitraten von virtuellen Verbindungen überwacht werden.

Im Zusammenhang mit den Figuren und bei der Beschreibung sind dabei Abkürzungen und Bezugszeichen verwendet, welche in der nachfolgenden Tabelle aufgelistet sind:

| | |
|---|---|
| ATM | Asynchronous Transfer Modes |
| LAN | Local Area Network |
| RAM | Random Access Memory |

| | |
|---|---|
| VCI | Virtual Channel Identifier für eine Verbindung |
| ÜZA | alter Überwachungszählerstand für eine Verbindung |
| ÜZN | neuer Überwachungszählerstand für eine Verbindung |
| VZ1, VZ2 | Verbindungszelle |
| ZZT | Zentraler Zähltakt |
| ZZA | alter Zählerstand des zentralen Zählers für eine Verbindung |
| ZZN | neuer Zählerstand des zentralen Zählers für eine Verbindung |
| ZZD | Zählerstanddifferenz des zentralen Zählers für eine Verbindung |
| MA | mittlerer Abstand zweier Verbindungszellen einer Verbindung |
| ABW | Abweichung des aktuellen Abstandes vom mittleren Abstand zweier Verbindungszellen |
| ÜANZ | Überlaufanzeige für eine Verbindung |
| SW | Schwellenwert für eine Verbindung |
| 10,20,30,40,50 | Programmkonnektoren |
| 100,...,240 | Programmabschnitte |
| 1000 | Netzknoten |
| 1100, 1400 | Anschlußleitung, Übertragungsstrecke |
| 1200 | Zugangsbauteil |
| 1210 | Überwachungsbauteil |
| 1211 | Zähltaktbauteil |
| 1212 | Überlaufregister |
| 1213 | Speicherbauteil, Policing-RAM |
| 1214 | Zählerbauteil |
| 1215 | Steuerungsbauteil |
| 1220 | Identifizierungsbauteil |
| 1250 | Umwertebauteil |
| 1300 | Koppelfeld |

**Patentansprüche**

1. Verfahren zur Überwachung von wenigstens einer Bitrate von wenigstens einer virtuellen Verbindung, deren auf einer Übertragungsstrecke ankommende Verbindungszellen bezüglich ihrer zeitlichen Häufigkeit überprüft werden, mit folgenden Merkmalen:

a) es wird ein zeitlicher mittlerer Zellenabstand (MA) der ankommenden Verbindungzellen gemäß einer mittleren Bitrate der virtuellen Verbindung und einer totalen Bitrate auf der Übertragungsstrecke vorgegeben (200)

b) es wird ein zentraler Zähler (1214) in einem zentralen Zähltakt gezählt (100, 110), dessen Zählerstand bei jeder der ankommenden Verbindungszellen gelesen und verbindungsindividuell notiert wird (211, 240),

c) es wird eine Zählerstanddifferenz (ZZD) gebildet (220) aus dem gelesenen Zählerstand (ZZN) für die ankommende Verbindungszelle einerseits und andererseits aus dem Zählerstand (ZZA), welcher für eine davor angekommene Verbindungszelle derselben Verbindung verbindungsindividuell notiert verblieben ist (240),

d) es wird eine Abweichung (ABW) eines jeweils aktuellen Zellenabstandes vom vorgegebenen mittleren Zellenabstand (MA) für die jeweils ankommende Verbindungszelle mittels der Zählerstanddifferenz (ZZD) ermittelt (221),

e) es wird ein Überwachungszählerstand (ÜZN) verbindungsindividuell gebildet (222) durch eine Aufsummierung (ÜZA + ABW) der Abweichungen des Zellenabstandes, wobei eine Sonderbehandlung für die entsprechende Verbindung gemäß diesem Überwachungszählerstand erfolgen kann.

2. Verfahren nach Anspruch 1,
dadurch **gekennzeichnet**,
daß für jede der Verbindungen mittels je einer ersten verbindungsindividuellen Überlaufanzeige ein Überlauf des zentralen Zählers notiert wird (111).

3. Verfahren nach Anspruch 2,
dadurch **gekennzeichnet**,
daß vor dem Notieren des überlaufs des zentralen Zählers ein Inhalt der ersten Überlaufanzeige in einer zweiten verbindungsindividuellen Überlaufanzeige notiert wird.

4. Verfahren nach einem der Ansprüche 1 bis 3,
dadurch **gekennzeichnet**,
daß eine Sonderbehandlung der Verbindung durchgeführt wird (231), falls der Überwachungszählerstand (ÜZN) einen ersten Grenzwert (SW) überschreitet (230).

5. Verfahren nach einem der Ansprüche 1 bis 4,
dadurch **gekennzeichnet**,
daß der Überwachungszählerstand (ÜZN) auf einen zweiten Grenzwert (Null) gesetzt wird, falls er diesen unterschreitet (225).

6. Verfahren nach einem der Ansprüche 1 bis 5,
dadurch **gekennzeichnet**,
daß nur der zentrale Zähler (1214) verwendet wird zur Überwachung aller virtuellen Verbindungen (100, 110).

7. Verfahren nach Anspruch 6,
dadurch **gekennzeichnet**,
daß der zentrale Zähler (1214) um einen bestimmten Zählwert (Eins) in seinem Zähltakt (ZZT) weitergezählt wird, welcher abgestimmt ist auf die jeweiligen mittleren Zellenabstände von allen jenen Verbindungen, zu deren Überwachung dieser zentrale Zähler zu verwenden ist.

8. Verfahren nach einem der Ansprüche 2 bis 7
**gekennzeichnet** durch wenigstens ein eigenes Überlaufspeicherelement (1212), welches für alle Verbindungen die Überlaufanzeigen (ÜANZ) aufweist.

9. Verfahren nach Anspruch 6,
dadurch **gekennzeichnet**,
daß nach einem Überlauf des zentralen Zählers bei der nächstfolgend ankommenden Verbindungszelle von einer der virtuellen Verbinaungen für diese Verbindung in keinem Fall die Sonderbehandlungen durchgeführt wird (210, 211).

10. Verfahren nach Anspruch 9,
**gekennzeichnet** durch

eine Zählerbreite des zentralen Zählers (1214) größer oder gleich 24 Binärstellen.

## Claims

1. Method for monitoring at least one bit rate of at least one virtual circuit, whose incoming connection cells on a transmission link are checked with respect to their temporal frequency, having the following features:

   a) a temporal average cell spacing (MA) of the incoming connection cells is prescribed (200) in accordance with an average bit rate of the virtual circuit and a total bit rate on the transmission link,
   b) a central counter (1214) is incremented (100, 110) by a central counting pulse, the counter reading of which is read for every one of the incoming connection cells and is noted for each individual connection (211, 240),
   c) a counter reading difference (ZZD) is formed (220) from the counter reading (ZZN) read for the incoming connection cell on the one hand and from the counter reading (ZZA) which has remained noted (240) for the individual connection for a previously arrived connection cell of the same connection on the other hand,
   d) a deviation (ABW) of a respective current cell spacing from the prescribed average cell spacing (MA) is determined (221) for the respective incoming connection cell by means of the counter reading difference (ZZD),
   e) a monitoring counter reading (ÜZN) is formed (222) for each individual connection by summing (ÜZA + ABW) the deviations of the cell spacing, with a special handling being possible for the respective connection in accordance with said monitoring counter reading.

2. Method according to Claim 1, characterized in that an overflow of the central counter is noted (111) for each of the connections by means of a first connection-specific overflow indicator in each case.

3. Method according to Claim 2, characterized in that before the overflow of the central counter is noted, the contents of the first overflow indicator are noted in a second connection-specific overflow indicator.

4. Method according to one of Claims 1 to 3, characterized in that a special handling of the connection is performed (231) if the monitoring counter reading (ÜZN) exceeds (230) a first threshold value (SW).

5. Method according to one of Claims 1 to 4, characterized in that the monitoring counter reading (ÜZN) is set to a second threshold value (zero) if it falls below (225) said value.

6. Method according to one of Claims 1 to 5, characterized in that only the central counter (1214) is used to monitor all virtual circuits (100, 110).

7. Method according to Claim 6, characterized in that the central counter (1214) is incremented by a specific counting value (one) by its counting pulse (ZZT) which is matched to the respective average cell spacings of all the connections for which said central counter is to be used for monitoring.

8. Method according to one of Claims 2 to 7, characterized by at least one separate overflow memory element (1212) which has the overflow indicators (ÜANZ) for all connections.

9. Method according to Claim 6, characterized in that after an overflow of the central counter, when the next connection cell arrives from one of the virtual circuits, the special handling is under no circumstances performed (210, 211) for this connection.

10. Method according to Claim 9, characterized by a counter width of the central counter (1214) of greater than or equal to 24 binary places.

## Revendications

1. Méthode pour contrôler au moins un débit binaire d'au moins une liaison virtuelle dont les cellules de liaison arrivant sur un trajet de transmission sont contrôlées quant à leur fréquence dans le temps, présentant les caractéristiques suivantes :

   a) un écart temporel moyen (EM) entre les cellules de liaison arrivantes est prescrit sur le trajet de transmission selon un débit binaire moyen de la liaison virtuelle et selon un débit binaire total (200),

b) un compteur centralisé (1214), dont la position est lue et relevée (211, 240) de façon spécifique à la liaison à chaque arrivée d'une des cellules de liaison, est compté dans une cadence de comptage centralisée (100, 110),

c) une différence (CCD) entre les positions du compteur centralisé est formée (220) d'une part à partir de la position du compteur lue (CCR) pour la cellule de liaison arrivante et d'autre part à partir de la position du compteur (CCA) qui est restée relevée de façon spécifique à la liaison (240) pour une cellule préalablement arrivée de la même liaison,

d) une divergence (DIV) d'un écart de cellule actuel respectif par rapport à l'écart moyen prescrit (EM) est déterminé (221) au moyen de la différence entre les positions du compteur (CCD) pour la cellule respectivement arrivante,

e) une position du compteur de contrôle (COR) est formée (222) de façon spécifique à la liaison par totalisation (COA + DIV) des divergences de l'écart entre les cellules, un traitement spécial pour la liaison correspondante pouvant être réalisé en fonction de cette position du compteur de contrôle.

2. Procédé selon la revendication 1,
**caractérisé en ce que**
pour chacune des liaisons un dépassement du compteur centralisé est relevé (111) au moyen de respectivement un premier affichage de dépassement spécifique à la liaison.

3. Procédé selon la revendication 2,
**caractérisé en ce que**
avant que le dépassement du compteur centralisé soit relevé, un contenu du premier affichage de dépassement est relevé dans un deuxième affichage de dépassement spécifique à la liaison.

4. Procédé selon l'une des revendications 1 à 3,
**caractérisé en ce que**
un traitement spécial de la liaison est exécuté (231) dans le cas où la position du compteur de contrôle (COR) dépasse (230) une première valeur limite (VS).

5. Procédé selon l'une des revendications 1 à 4,
**caractérisé en ce que**
la position du compteur de contrôle (COR) est mise à une deuxième valeur limite (zéro) si elle passe au-dessous de cette valeur (225).

6. Procédé selon l'une des revendications 1 à 5,
**caractérisé en ce que**
seul le compteur centralisé (1214) est utilisé pour le contrôle de toutes les liaisons virtuelles (100, 110).

7. Procédé selon la revendication 6,
**caractérisé en ce que**
le compteur centralisé (1214) continue à être compté d'une valeur de comptage définie (un) dans sa cadence de comptage (CCC) qui est adaptée aux écarts moyens respectifs entre les cellules de toutes les liaisons pour le contrôle desquelles ce compteur centralisé doit être utilisé.

8. Procédé selon l'une des revendications 2 à 7,
**caractérisé** par au moins un élément de mémoire de dépassement (1212) qui présente les affichages de dépassement (AFFD) pour toutes les liaisons.

9. Procédé selon la revendication 6,
**caractérisé en ce que**
à l'issue d'un dépassement du compteur centralisé, à l'arrivée de la cellule de liaison suivante d'une liaison virtuelle, le traitement spécial n'est en aucun cas exécuté (210, 211) pour cette liaison.

10. Procédé selon la revendication 9,
**caractérisé** par
une largeur du compteur centralisé (1214) supérieure ou égale à 24 signes binaires.

EP 0 483 397 B1

# FIG 1

100 :  NÄCHSTEN ZÄHLTAKT ( ZZT )
ABWARTEN

110 :  ZENTRALEN ZÄHLER
INKREMENTIEREN

KEIN
ÜBERLAUF

ÜBERLAUF

111 :  ÜBERLAUFANZEIGEN
SETZEN

10

120 :  WEITERE VERBINDUNGSZELLE
ANGEKOMMEN ?

NEIN

JA

20

130 :  VERBINDUNGSÜBERWACHUNG
FÜR DIE VCI DER ANGEKOMMENEN
VERBINDUNGSZELLE

16

# FIG 2A

# FIG 2B

(30)

220 : ZÄHLERSTANDDIFFERENZ
ERMITTELN ( ZZD = ZZN - ZZA )

221 : ABWEICHUNG DES ZELLENABSTANDES
ERMITTELN ( ABW = MA - ZZD )

222 : ÜBERWACHUNGSZÄHLERSTAND
ERMITTELN ( ÜZN = ÜZA + ABW )

223 : ÜBERWACHUNGSZÄHLERSTAND
PRÜFEN ( ÜZN < ⧫ )

IST GRÖSSER
ODER GLEICH
NULL

IST KLEINER
ALS NULL

225 : ÜBERWACHUNGSZÄHLERSTAND
NULL SETZEN ( ÜZA = ⧫ )

(40)

(50)

## FIG 2C

( 40 )

230 : ÜBERWACHUNGSZAHLERSTAND
AUF ÜBERSCHREITUNG DES
SCHWELLENWERTES
PRÜFEN ( UZN > SW )

SCHWELLENWERT IST
NICHT ÜBERSCHRITTEN

SCHWELLENWERT
IST ÜBERSCHRITTEN

231 : SONDERBEHANDLUNG

( 50 )

( 10 )

## FIG 2D

( 50 )

240 : ÜBERWACHUNGSZÄHLERSTAND
UND ZÄHLERSTAND DES
ZENTRALEN ZÄHLERS
NOTIEREN ( ZZA = ZZN , ÜZA = ÜZN )

( 10 )

FIG 3

# FIG 4

ÜANZ = 1
ÜZA  = 6600
ZZA  = ....
MA   = 350
SW   = 8000

——— ZZN = 100 ———————————————

ÜANZ = 0
ÜZA  = 6600
ZZA  = 100
MA   = 350
SW   = 8000

——— ZZN = 200 ———————————————

ÜANZ = 0
ÜZA  = 6850
ZZA  = 200
MA   = 350
SW   = 8000

VZ1

VZ2

ZZT